(19) Europäisches Patentamt

European Patent Office

Office européen des brevets

(11) **EP 1 672 815 A1**

(12) **EUROPEAN PATENT APPLICATION**

(43) Date of publication:
 **21.06.2006 Bulletin 2006/25**

(51) Int Cl.:
 *H04B 7/005* (2006.01)   *H04L 1/00* (2006.01)

(21) Application number: **04293041.2**

(22) Date of filing: **17.12.2004**

| | |
|---|---|
| (84) Designated Contracting States:<br>**AT BE BG CH CY CZ DE DK EE ES FI FR GB GR HU IE IS IT LI LT LU MC NL PL PT RO SE SI SK TR**<br>Designated Extension States:<br>**AL BA HR LV MK YU**<br><br>(71) Applicant: **ALCATEL**<br>**75008 Paris (FR)** | (72) Inventor: **Schreiber, Gerhard**<br>**70825 Korntal-Münchingen (DE)**<br><br>(74) Representative: **Schäfer, Wolfgang**<br>**Dreiss, Fuhlendorf, Steimle & Becker**<br>**Postfach 10 37 62**<br>**70032 Stuttgart (DE)** |

(54) **A method of operating a wireless communication system**

(57)   A method of operating a mobile station of a wireless communication system is described. A power value is looked up in a table stored in the mobile station. A signal is transmitted from the mobile station to a base station with a power according to the looked up power value. The power value may be looked up depending on an average bit error probability (MEAN_BEP) of a signal received by the base station and/or depending on a variance of the bit error probability (CV_BEP) of the signal received by the base station.

| MEAN_BEP/CV_BEP | 0 | 1 | 2 | 3 | 4 | 5 | 6 | 7 |
|---|---|---|---|---|---|---|---|---|
| 0 | 33 | 33 | 33 | 33 | 33 | 33 | 33 | 33 |
| 1 | 33 | 33 | 33 | 33 | 32 | 32 | 32 | 32 |
| 2 | 33 | 33 | 32 | 32 | 32 | 32 | 31 | 31 |
| 3 | 32 | 32 | 31 | 31 | 31 | 31 | 31 | 25 |
| 4 | 32 | 31 | 31 | 31 | 31 | 31 | 26 | 25 |
| 5 | 31 | 30 | 30 | 31 | 31 | 31 | 25 | 25 |
| 6 | 31 | 30 | 29 | 29 | 31 | 30 | 25 | 26 |
| 7 | 30 | 29 | 29 | 29 | 29 | 27 | 25 | 28 |
| 8 | 30 | 29 | 29 | 29 | 29 | 25 | 25 | 29 |
| 9 | 29 | 29 | 29 | 29 | 28 | 25 | 25 | 29 |
| 10 | 27 | 27 | 27 | 29 | 28 | 24 | 25 | 28 |
| 11 | 27 | 27 | 27 | 26 | 26 | 23 | 24 | 27 |
| 12 | 27 | 27 | 27 | 26 | 25 | 22 | 24 | 27 |
| 13 | 27 | 27 | 26 | 26 | 25 | 23 | 25 | 27 |
| 14 | 27 | 27 | 26 | 26 | 24 | 23 | 25 | 27 |
| 15 | 27 | 27 | 26 | 26 | 24 | 24 | 25 | 27 |
| 16 | 27 | 26 | 25 | 22 | 22 | 22 | 23 | 27 |
| 17 | 26 | 25 | 23 | 21 | 21 | 22 | 23 | 25 |
| 18 | 26 | 24 | 22 | 22 | 22 | 23 | 23 | 21 |
| 19 | 22 | 23 | 23 | 23 | 23 | 23 | 23 | 22 |
| 20 | 22 | 24 | 23 | 24 | 24 | 24 | 23 | 21 |
| 21 | 23 | 24 | 23 | 24 | 24 | 24 | 22 | 20 |
| 22 | 23 | 24 | 24 | 24 | 23 | 23 | 22 | 19 |
| 23 | 22 | 22 | 24 | 24 | 24 | 23 | 21 | 18 |
| 24 | 21 | 22 | 24 | 24 | 24 | 23 | 21 | 18 |
| 25 | 20 | 21 | 24 | 24 | 24 | 24 | 21 | 18 |
| 26 | 19 | 21 | 23 | 24 | 24 | 24 | 21 | 16 |
| 27 | 18 | 20 | 23 | 22 | 24 | 24 | 21 | 15 |
| 28 | 17 | 19 | 21 | 23 | 24 | 24 | 24 | 15 |
| 29 | 16 | 18 | 21 | 21 | 22 | 22 | 22 | 18 |
| 30 | 15 | 17 | 19 | 19 | 21 | 22 | 22 | 19 |
| 31 | 14 | 16 | 18 | 19 | 19 | 21 | 23 | 17 |

Fig. 2

EP 1 672 815 A1

**Description**

The invention relates to a method of operating a wireless communication system wherein a base station communicates with a mobile station.

In order to minimise the power consumption of a mobile station, it is known to start a transmission from the mobile station to a base station with a low power level of the mobile station. Then, the base station analyses the received signal with regard to its bit errors. If the bit error rate becomes too high, the base station transmits a transmission power control signal to the mobile station and requests an increase of the power level of the mobile station.

It is an object of the invention to provide a method of operating a wireless communication system that allows a simple but efficient power control.

The invention solves this object with a method of operating a wireless communication system according to claim 1, with a method of operating a mobile station or a base station according to claims 3 and 6, with a wireless communication system according to claim 10 and with a mobile station or a base station according to claims 12 and 13.

According to the invention, different power values are stored in a table. One of these power values is looked up from the table and then the transmission of a signal is carried out with a power according to the selected power value.

As a result, the invention allows to select the power to be used for the transmission by simply looking up a table. Time consuming and complicated calculations are not necessary. Due to the fact that different power values may be stored in the table, the invention also allows to select an optimised power depending on given values. Summarized, the invention provides not only a fast, but also a very flexible and efficient method to control the power within a wireless communication system.

In an embodiment of the invention, different tables are stored for different scenarios and/or for different points in times. This allows an optimised adaptation of the table to different situations. The performance of the wireless communication system is further increased.

In another embodiment of the invention, the power value is looked up depending on an average bit error probability of a received signal and/or depending on a variance of the bit error probability of the received signal. These values are evaluated within the base station and the mobile station and are transmitted from the base station to the mobile station and vice versa. The evaluation of these values for selecting the power value, therefore, does not necessitate any additional steps so that these values can be used by the invention at once without any additional effort.

Further features, applications and advantages of the invention will become apparent from the following description of exemplary embodiments of the invention that are shown in the drawings. All described and shown features as such or in any combination represent the subject matter of the invention, independently of their wording and independently of their combination in the claims or the dependencies of the claims.

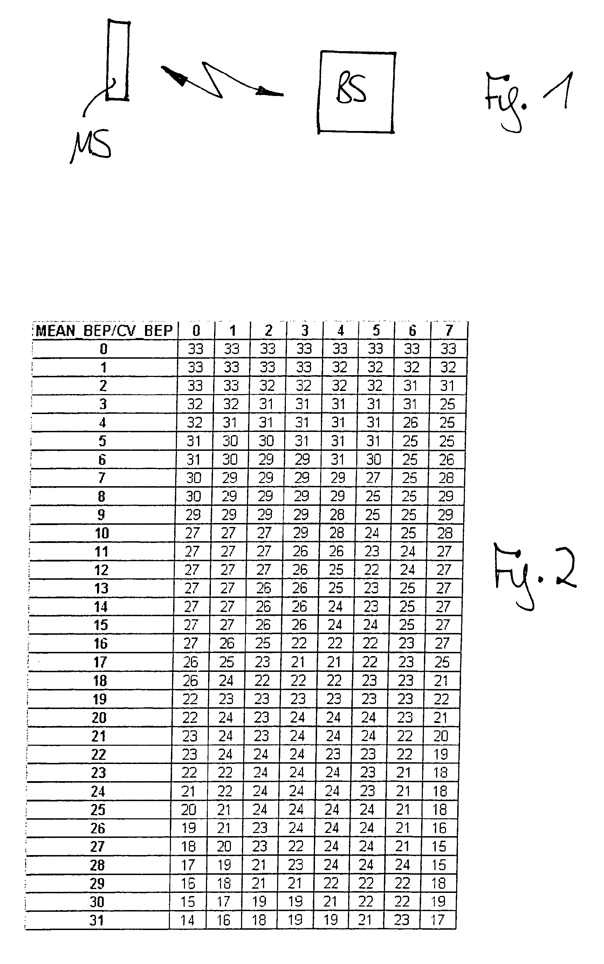

Figure 1 of the drawings shows a schematic representation of a wireless communication system and figure 2 shows a table to be used in a method of operating the wireless communication system of figure 1.

In figure 1, a wireless communication system is shown comprising a base station BS and at least one mobile station MS. In particular, the GSM standard (GSM = global system for mobile communication) or the UMTS standard (UMTS = universal mobile telecommunication system) is used in the wireless communication system of figure 1.

It is assumed that the base station BS covers one of a number of cells of the wireless communication system and that the mobile station MS is located within this cell. Furthermore, it is assumed that the mobile station MS transmits a signal to the base station BS. The transmission of this signal is carried out by the mobile station MS with a power according to a given power value.

Depending on the received signal, the base station BS measures a bit error probability BEP for the received signal. This bit error probability BEP reflects the quality of the transmission channel from the mobile station MS to the base station BS. The bit error probability BEP is estimated burst-wise in the base station BS for consecutive so-called reporting periods of the received signal. The evaluation of the bit error probability BEP is carried out by the base station BS according to known procedures. For example, the bit error probability BEP is evaluated according to the 3rd Generation Partnership Project 3GPP.

Then, the base station BS calculates a measured average bit error probability MEAN_BEP for the received signal. This measured average bit error probability MEAN_BEP is the average of the bit error probability BEP during the reporting period. The calculation may be carried out according to the following equation:

$$\text{MEAN\_BEP}_{n+1} = ((1 - \text{ff}) * \text{MEAN\_BEP}_n) + (\text{ff} * \text{BEP})$$

with n being an iteration index und ff being a forgetting factor.

Furthermore, the base station BS calculates a variance of the bit error probability CV_BEP for the received signal.

This variance of the bit error probability CV_BEP is the average of a variation coefficient CV during the reporting period. The variation coefficient CV is calculated according to known procedures. For example, the variation coefficient CV is evaluated according to the 3rd Generation Partnership Project 3GPP.

Then, the calculation of the variance of the bit error probability CV_BEP may be carried according to the following equation:

$$CV\_BEP_{n+1} = ((1 - ff) * CV\_BEP_n) + (ff * CV)$$

with n being the iteration index und ff being the forgetting factor.

The evaluation of the measured average bit error probability MEAN_BEP and of the variance of the bit error probability CV_BEP are described in further detail in the "3rd Generation Partnership Project; Technical Specification Group GSM/EDGE; Radio Access Network; Radio Subsystem Link Control; Release 4; 3GPP TS 45.008, V4.10.0 (2003-04)", in particular in chapter 8.2.

The evaluated average bit error probability MEAN_BEP and the evaluated variance of the bit error probability CV_BEP are then transmitted from the base station BS to the mobile station MS.

Figure 2 shows a table that is present in the mobile station MS. In the x- or vertical direction of the table, values of the average bit error probability MEAN_BEP are listed. In the shown example, the values start with "0", increase consecutively and end with "31". In the y- or horizontal direction of the table of figure 2, values of the variance of the bit error probability CV_BEP are listed. In the shown example, the values start with "0", increase consecutively and end with "7".

Based on the average bit error probability MEAN_BEP and variance of the bit error probability CV_BEP received from the base station BS, the mobile station MS looks up a power value from the table of figure 2. The mobile station MS uses the average bit error probability MEAN_BEP and variance of the bit error probability CV_BEP as addresses in the table of figure 2. For example, for an average bit error probability MEAN_BEP of "11" and a variance of the bit error probability CV_BEP of "5", a power value of "23" is selected from the table of figure 2.

Then, the mobile station MS continues to transmit a signal to the base station BS with a power according to the newly selected power value, i.e. with the selected power value of "23".

This update of the power value is carried out by the mobile station MS consecutively. Thereby, a consecutive adaptation of the power value is realized within the mobile station MS. As described, the new power values depend on the corresponding average bit error probabilities MEAN_BEP and variances of the bit error probabilities CV_BEP measured by the base station BS and then transmitted to the mobile station MS.

The described method may be used as an open loop power control scheme or as a closed loop power control scheme.

As already mentioned, the table that is shown in figure 2 and that is stored in the mobile station MS comprises predefined power values for selecting the amount of power to be used for the transmission. The power values listed in the table of figure 2 may be given, for example, in "dBm".

The table of figure 2 may be built up with the help of former simulations. The table may also be built up based on former measurements of power values. As well, the power values of the table may be selected based on formerly collected experiences.

The table of figure 2 may be directed to a specific scenario, for example to an urban area or to a rural area. As well, different tables for different points of times may be provided, for example for the night-time or the daytime, or for example for the winter season or the summer season. The actual load within the wireless communication system may also be considered in different tables.

These different tables may be selected depending on the actual scenario that may be deduced e.g. from the actually used cell. Furthermore, the different tables may be selected depending on the actual date and time and/or on the actual load.

A change between different tables may be carried out for example on the occasion of a reselection of the cell when the mobile station MS moves into a new cell. In this situation, it is possible that the corresponding base station of the new cell transmits the respective table/s to the mobile station MS.

Instead of storing the table of figure 2 within the mobile station MS, it is also possible that the table of figure 2 is realized as an equation and that only this equation is present within the mobile station MS. Instead of reading out the power values from the table, the mobile station MS then calculates the power values based on the corresponding equation. Of course, different equations may then be stored within the mobile station MS for different tables.

Instead of storing the table/s of figure 2 within the mobile station MS, it is also possible to store these table/s within the base station BS. In this case, the base station BS looks up a power value from the table/s of figure 2 depending on the average bit error probability MEAN_BEP and the variance of the bit error probability CV_BEP that are evaluated by the base station BS for those signals received by the base station BS from the mobile station MS. Then, the base station BS transmits a signal representing the looked up power value to the mobile station MS and the mobile station MS uses this power value for further transmissions to the base station BS. In this case, therefore, the mobile station MS does not have to store the table/s of figure 2.

In the above described methods, the mobile station MS transmits a signal to the base station BS and the mobile station MS adapts its power depending on the average bit error probabilities MEAN_BEP and variances of the bit error probabilities CV_BEP received from the base station BS. Of course, it is also possible to use the described method in the opposite direction. In this latter case, the base station BS transmits a signal to the mobile station MS and the base station BS adapts its power depending on the average bit error probabilities MEAN_BEP and variances of the bit error probabilities CV_BEP received from the mobile station MS. Furthermore, in this latter case, the necessary table/s is/are present within the base station BS.

In both cases, i.e. in the case that the table/s is/are stored within the mobile station MS in order to adapt the power of the mobile station MS as well as in the case that the table/s is/are stored within the base station BS in order to adapt the power of the base station BS, a computer system, e.g. a micro controller or the like, is present in the mobile station MS and/or the base station BS. A computer program is loaded within the computer system for carrying out the described method/s. Furthermore, a memory is provided within the mobile station MS and/or the base station BS for storing the described table/s.

**Claims**

1. A method of operating a wireless communication system wherein a base station (BS) communicates with a mobile station (MS), **characterized in that** a power value is looked up in a stored table (fig. 2) and that a signal is transmitted with a power according to the looked up power value.

2. The method of claim 1 **characterized in that** different tables are stored for different scenarios and/or for different points in times and that the power value is looked up depending on the actual scenario and/or the actual date and/or time.

3. A method of operating a mobile station (MS) of a wireless communication system, **characterized in that** a power value is looked up in a table (fig. 2) stored in the mobile station (MS) and that a signal is transmitted from the mobile station (MS) to a base station (BS) with a power according to the looked up power value.

4. A method of operating a base station (BS) of a wireless communication system, **characterized in that** a power value is looked up in a table (fig. 2) stored in the base station (BS) and that a signal representing the looked up power value is transmitted from the base station (BS) to a mobile station (MS).

5. The method of one of claims 3 or 4 **characterized in that** the power value is looked up depending on an average bit error probability (MEAN_BEP) of a signal received by the base station (BS) and/or depending on a variance of the bit error probability (CV_BEP) of the signal received by the base station (BS).

6. The method of claim 3 **characterized in that** the average bit error probability (MEAN_BEP) and/or the variance of the bit error probability (CV_BEP) is/are transmitted from the base station (BS) to the mobile station (MS).

7. A method of operating a base station (BS) of a wireless communication system, **characterized in that** a power value is looked up in a table (fig. 2) stored in the base station (BS) and that a signal is transmitted from the base station (BS) to a mobile station (MS) with a power according to the looked up power value.

8. The method of claim 7 **characterized in that** the power value is looked up depending on an average bit error probability (MEAN BEP) of a signal received by the mobile station (MS) and/or depending on a variance of the bit error probability (CV_BEP) of the signal received by the mobile station (MS).

9. The method of claim 8 **characterized in that** the average bit error probability (MEAN_BEP) and/or the variance of the bit error probability (CV_BEP) is/are transmitted from the mobile station (MS) to the base station (BS).

10. A program for a computer system that is programmed to carry out the method of one of the preceding claims.

11. A wireless communication system comprising a base station (BS) and a mobile station (MS) **characterized in that** different power values are stored in a table (fig. 2) and that a transmission of a signal is carried out with a power according to one of the stored power values.

12. The system of claim 11 **characterized in that** the table is stored in the base station (BS) and/or the mobile station (MS).

13. A mobile station (MS) of a wireless communication system, **characterized in that** a power value is stored in a table (fig. 2) of the mobile station (MS) and that the transmission of a signal from the mobile station (MS) to a base station (BS) is carried out with a power according to one of the stored power values.

14. A base station (BS) of a wireless communication system, **characterized in that** a power value is stored in a table (fig. 2) of the base station (BS) and that the transmission of a signal from the base station (BS) to a mobile station (MS) is carried out with a power according to one of the stored power values or that a signal representing one of the stored power values is transmitted from the base station (BS) to a mobile station (MS).

15. The system of claim 11 or the mobile station (MS) of claim 13 or the base station (BS) of claim 14, **characterized in that** different tables are stored for different scenarios and/or for different points in times and that the transmission of a signal is carried out with a power value depending on the actual scenario and/or the actual date and/or time.

Fig. 1

| MEAN_BEP/CV_BEP | 0 | 1 | 2 | 3 | 4 | 5 | 6 | 7 |
|---|---|---|---|---|---|---|---|---|
| 0 | 33 | 33 | 33 | 33 | 33 | 33 | 33 | 33 |
| 1 | 33 | 33 | 33 | 33 | 32 | 32 | 32 | 32 |
| 2 | 33 | 33 | 32 | 32 | 32 | 32 | 31 | 31 |
| 3 | 32 | 32 | 31 | 31 | 31 | 31 | 31 | 25 |
| 4 | 32 | 31 | 31 | 31 | 31 | 31 | 26 | 25 |
| 5 | 31 | 30 | 30 | 31 | 31 | 31 | 25 | 25 |
| 6 | 31 | 30 | 29 | 29 | 31 | 30 | 25 | 26 |
| 7 | 30 | 29 | 29 | 29 | 29 | 27 | 25 | 28 |
| 8 | 30 | 29 | 29 | 29 | 29 | 25 | 25 | 29 |
| 9 | 29 | 29 | 29 | 29 | 28 | 25 | 25 | 29 |
| 10 | 27 | 27 | 27 | 29 | 28 | 24 | 25 | 28 |
| 11 | 27 | 27 | 27 | 26 | 26 | 23 | 24 | 27 |
| 12 | 27 | 27 | 27 | 26 | 25 | 22 | 24 | 27 |
| 13 | 27 | 27 | 26 | 26 | 25 | 23 | 25 | 27 |
| 14 | 27 | 27 | 26 | 26 | 24 | 23 | 25 | 27 |
| 15 | 27 | 27 | 26 | 26 | 24 | 24 | 25 | 27 |
| 16 | 27 | 26 | 25 | 22 | 22 | 22 | 23 | 27 |
| 17 | 26 | 25 | 23 | 21 | 21 | 22 | 23 | 25 |
| 18 | 26 | 24 | 22 | 22 | 22 | 23 | 23 | 21 |
| 19 | 22 | 23 | 23 | 23 | 23 | 23 | 23 | 22 |
| 20 | 22 | 24 | 23 | 24 | 24 | 24 | 23 | 21 |
| 21 | 23 | 24 | 23 | 24 | 24 | 24 | 22 | 20 |
| 22 | 23 | 24 | 24 | 24 | 23 | 23 | 22 | 19 |
| 23 | 22 | 22 | 24 | 24 | 24 | 23 | 21 | 18 |
| 24 | 21 | 22 | 24 | 24 | 24 | 23 | 21 | 18 |
| 25 | 20 | 21 | 24 | 24 | 24 | 24 | 21 | 18 |
| 26 | 19 | 21 | 23 | 24 | 24 | 24 | 21 | 16 |
| 27 | 18 | 20 | 23 | 22 | 24 | 24 | 21 | 15 |
| 28 | 17 | 19 | 21 | 23 | 24 | 24 | 24 | 15 |
| 29 | 16 | 18 | 21 | 21 | 22 | 22 | 22 | 18 |
| 30 | 15 | 17 | 19 | 19 | 21 | 22 | 22 | 19 |
| 31 | 14 | 16 | 18 | 19 | 19 | 21 | 23 | 17 |

Fig. 2

**European Patent Office**

**EUROPEAN SEARCH REPORT**

Application Number

EP 04 29 3041

## DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| X<br>Y | US 2004/235438 A1 (QUILISCH HAKAN ET AL) 25 November 2004 (2004-11-25)<br>* abstract *<br>* figures 4A,4B *<br>* paragraphs [0005], [0008], [0022], [0026], [0031], [0032], [0037] * | 1-4,7, 10-15<br>5,6,8,9 | H04B7/005<br>H04L1/00 |
| X<br>Y | US 2003/144019 A1 (NELSON DAVID S ET AL) 31 July 2003 (2003-07-31)<br>* abstract *<br>* figure 5 *<br>* paragraphs [0008], [0014], [0015], [0028], [0029] * | 1-4,7, 10-15<br>5,6,8,9 | |
| X<br>Y | US 6 745 013 B1 (PORTER JOHN DAVID ET AL) 1 June 2004 (2004-06-01)<br>* abstract *<br>* column 2, line 30 - line 55 * | 1,3,4,7, 10-14<br>5,6,8,9 | |
| X | US 6 757 537 B1 (CHOI JIN-WOO ET AL) 29 June 2004 (2004-06-29)<br>* abstract *<br>* column 1, line 15 - line 20 *<br>* column 2, line 42 - line 62 *<br>* column 10, line 27 - line 57 *<br>* column 11, line 2 - line 5 *<br>* column 12, line 5 - line 25 * | 4,14 | TECHNICAL FIELDS SEARCHED (Int.Cl.7)<br>H04B<br>H04L |
| Y | WO 03/039024 A (NOKIA CORPORATION; RODRIGUEZ GIL, REGINA; ROMERO GARCIA, JAVIER) 8 May 2003 (2003-05-08)<br>* abstract *<br>* page 13, line 18 - last line *<br>* page 14, line 20 - line 23 *<br>* figure 4 * | 5,6,8,9 | |

-/--

The present search report has been drawn up for all claims

| Place of search | Date of completion of the search | Examiner |
|---|---|---|
| The Hague | 26 April 2005 | Lustrini, D |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

European Patent
Office

**EUROPEAN SEARCH REPORT**

Application Number

EP 04 29 3041

## DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| Y | US 2003/202574 A1 (BUDKA KENNETH C ET AL) 30 October 2003 (2003-10-30) <br> * abstract * <br> * figure 3 * <br> * paragraphs [0091] - [0094], [0166], [0167] * <br> ----- | 5,6,8,9 | |
| | | | TECHNICAL FIELDS SEARCHED (Int.Cl.7) |

The present search report has been drawn up for all claims

| Place of search | Date of completion of the search | Examiner |
|---|---|---|
| The Hague | 26 April 2005 | Lustrini, D |

CATEGORY OF CITED DOCUMENTS

X : particularly relevant if taken alone
Y : particularly relevant if combined with another
   document of the same category
A : technological background
O : non-written disclosure
P : intermediate document

T : theory or principle underlying the invention
E : earlier patent document, but published on, or
   after the filing date
D : document cited in the application
L : document cited for other reasons
   .................................................................
& : member of the same patent family, corresponding
   document

EPO FORM 1503 03.82 (P04C01)

## ANNEX TO THE EUROPEAN SEARCH REPORT
## ON EUROPEAN PATENT APPLICATION NO.

EP 04 29 3041

This annex lists the patent family members relating to the patent documents cited in the above-mentioned European search report.
The members are as contained in the European Patent Office EDP file on
The European Patent Office is in no way liable for these particulars which are merely given for the purpose of information.

26-04-2005

| Patent document cited in search report | | Publication date | Patent family member(s) | | Publication date |
|---|---|---|---|---|---|
| US 2004235438 | A1 | 25-11-2004 | NONE | | |
| US 2003144019 | A1 | 31-07-2003 | NONE | | |
| US 6745013 | B1 | 01-06-2004 | GB | 2348572 A | 04-10-2000 |
| | | | AU | 3310000 A | 16-10-2000 |
| | | | WO | 0059130 A1 | 05-10-2000 |
| US 6757537 | B1 | 29-06-2004 | KR | 2001002805 A | 15-01-2001 |
| | | | AU | 752512 B2 | 19-09-2002 |
| | | | AU | 5573600 A | 09-01-2001 |
| | | | BR | 0006820 A | 05-06-2001 |
| | | | CA | 2339369 A1 | 28-12-2000 |
| | | | CN | 1314058 A ,C | 19-09-2001 |
| | | | EP | 1104629 A1 | 06-06-2001 |
| | | | JP | 2003502959 T | 21-01-2003 |
| | | | WO | 0079805 A1 | 28-12-2000 |
| | | | KR | 2001072764 A | 31-07-2001 |
| | | | RU | 2199833 C2 | 27-02-2003 |
| WO 03039024 | A | 08-05-2003 | WO | 03039024 A2 | 08-05-2003 |
| US 2003202574 | A1 | 30-10-2003 | NONE | | |

EPO FORM P0459

For more details about this annex : see Official Journal of the European Patent Office, No. 12/82